# EUROPÄISCHE PATENTSCHRIFT

(11) **EP 0 391 289 B1**
(45) Veröffentlichungstag und Bekanntmachung des Hinweises auf die Patenterteilung: **02.06.1993**
(21) Anmeldenummer: 90106232.3
(22) Anmeldetag: 31.03.1990
(51) Int. Cl.: B66F 9/075

(54) **Gabelstapler**
Fork lift truck
Chariot élévateur à fourches

(30) Priorität: 04.04.1989 DE 3910882
(43) Veröffentlichungstag der Anmeldung: 10.10.1990
(73) Patentinhaber: STILL GMBH, D-22113 Hamburg (DE)
(72) Erfinder: Evert, Rainer, Dipl.-Ing., D-2071 Siek (DE)
(74) Vertreter: Schaefer, Gerhard, Dr.

(56) Entgegenhaltungen:
- DE-A- 3 020 250
- DE-C- 939 618
- DE-C- 953 599
- FR-A- 1 025 604
- FR-A- 1 114 410
- US-A- 4 100 987

## Beschreibung

Die Erfindung betrifft einen Gabelstapler mit einem Fahrzeugrahmen, der mit einem zwei Rahmenlängsholme heckseitig verbindenden Gegengewicht versehen ist und eine an den vorderen Enden der Rahmenlängsholme angeordnete Querverbindung aufweist, wobei als Querverbindung ein bodennaher Untergurt und mindestens eine dazu vertikal beabstandete Druckstrebe vorgesehen ist.

Aus der DE-OS 34 42 012 ist bereits ein Gabelstapler bekannt, bei dem als vordere Querverbindung ein fest mit den Rahmenlängsholmen verbundener Querspant mit einem versteifenden Rechteckprofil vorgesehen ist. Die gezeigte Rahmenausführung stellt eine geschweißte Konstruktion dar, die nach dem Zusammenbau, aber noch vor dem Anbringen des Gegengewichtes lackiert wird. Dabei ist von Nachteil, daß der Rahmen sehr sperrig ist und daher für den Fall, daß die Lackierung durch eine Pulvereinbrennanlage oderim Tauchbad erfolgen soll, sehr große und damit teure Anlagen erforderlich sind. Die Achsaufnahme erfolgt an zwei scheibenförmigen platten, die durch ein bodennah angeschweißtes Bodenplattenblech miteinander verbunden sind, das an dem Querspant angeschweißt ist und versteifend wirkt. In vielen Fällen ist es jedoch beispielsweise aus Wartungsgründen erwünscht, einen unten offenen Fahtzeugrahmen zu haben, was jedoch im vorliegenden Fall aus Stabilitätsgründen nicht möglich ist.

Ein gattungsgemäßer Gabelstapler ist in der US-A-4 100 987 gezeigt. Hierbei ist die Querverbindung ebenfalls unlösbar montiert, unter anderem deshalb, weil das dort zwischen den Rahmenlängsholmen angeordnete Differentialgehäuse am bodennahen Untergurt der Querverbindung abgestützt wird. Auch bei diesem Gabelstapler ergeben sich beim Lackieren die oben angeführten Probleme.

Der vorliegenden Erfindung liegt die Aufgabe zugrunde, die genannten Nachteile zu vermeiden und einen Gabelstapler mit einfach herzustellendem Rahmen zur Verfügung zu stellen, der eine hohe Stabilität besitzt.

Diese Aufgabe wird erfindungsgemäß dadurch gelöst, daß das Gegengewicht, der Untergurt und die Druckstrebe lösbar mit den Rahmenlängsholmen verbunden sind. Die Rahmenlängsholme können daher kompakt und platzsparend konstruiert werden, so daß die sum Lackieren erforderliche Anlage klein bleibt. Der bodennahe Untergurt nimmt die Radkräfte und asymmetrischen Stoßkräfte auf, die beispielsweise beim Anecken eines Vorderrades an einem Bordstein entstehen. Die Druckstrebe dient der Aufnahme von aus dem Fahrzeuggewicht und den zu transportierenden Lasten resultierenden Druckkräften.

In einer vorteilhaften Weiterbildung des Erfindungsgegenstandes ist vorgesehen, daß die Rahmenlängsholme im vorde- ren Endbereich eine geringere Biegesteifigkeit gegenüber quer zur Fahrzeuglängsachse einwirkenden Kräften aufweist, als im mittleren und heckseitigen Bereich. Dadurch kann der beim Schweißen der Rahmenlängsholme aufgetretene Verzug beim Befestigen des Untergurtes und der Druckstrebe leich- ter beseitigt werden. Nach dem Zusammenbau weist der Fahrzeugrahmen eine sehr hohe Steifigkeit auf.

Um eine möglichst günstige Krafteinleitung in den Rahmen zu erhalten, ist es gemäß einer weiteren vorteilhaften Ausbildung des Erfindungsgegenstandes vorteilhaft, wenn der Untergurt flächig an den Rahmenlängsholmen abgestützt ist und sich die Verbindungsflächen bis in den Bereich höherer Biegesteifigkeit erstrecken. Die in den vorderen Bereich des Rahmens eingeleiteten Kräfte werden daher sehr weit in den mittleren und hinteren Rahmenbereich eingeleitet, der konstruktiv sehr steif ausgelegt ist und an dem das Gegengewicht befestigt ist.

Ein zusätzlicher Vorteil aus der Verwendung des Untergurtes und der dazu vertikal beabstandeten Druckstrebe ergibt sich dann, wenn der Radantrieb zwischen Untergurt und Druckstrebe angeordnet ist. Dadurch wird eine optimale Raumausnutzung erreicht. Der Radantrieb befindet sich zudem in einem Bereich, der sehr gut zur Aufnahme von Radkräften geeignet ist.

Gemäß einer weiteren vorteilhaften Ausgestaltung des Erfindungsgegenstandes sind zwei voneinander getrennte Radantriebseinheiten vorgesehen. Durch die bei der Herstellung unvermeidlichen Toleranzen kann es beim Zusammenbau der Rahmenlängsholme zu Verspannungen kommen. Bei Verwendung einer durchgehenden Antriebsachse können diese Spannungen auf die Antriebsachse übertragen werden. Dies wird vermieden, wenn zwei getrennte Radantriebseinheiten Verwendung finden.

Die Erfindung soll anhand der nachstehenden schematischen Figuren in einem Ausführungsbeispiel näher erläutert werden.

Es zeigen:

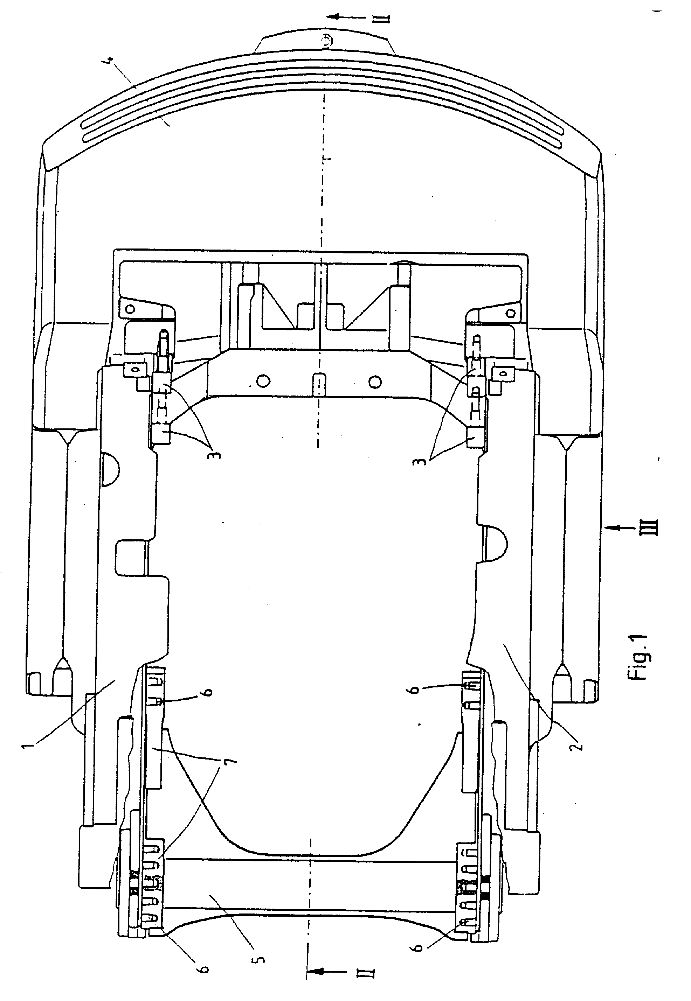

- Figur 1: eine Draufsicht auf einen Fahrzeugrahmen eines Gabelstaplers
- Figur 2: einen Rahmenlängsschnitt gemäß Linie II-II in Figur 1
- Figur 3: eine Seitenansicht eines Rahmenlängsholmes gemäß Pfeil III in Figur 1
- Figur 4: eine Draufsicht auf den Rahmenlängsholm gemäß Figur 3
- Figur 5: eine Heckansicht des Rahmenlängsholmes gemäß Pfeil V in Figur 3
- Figur 6: eine Heckansicht des Rahmenlängsholmes gemäß Figur 5 mit eingebautem Kunststoffinnentank
- Figur 7: einen Rahmenquerschnitt gemäß Linie VII-VII in Figur 2 mit eingebauter Radantriebseinheit unter Verzicht auf eine Darstellung des Untergurtes
- Figur 8: eine Draufsicht auf die Radantriebseinheit gemäß Pfeil VIII in Figur 7

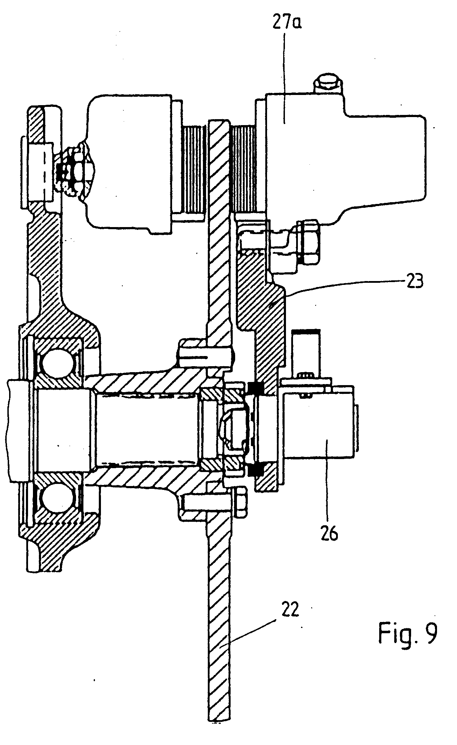

- Figur 9: einen Teilschnitt durch die Bremsanlage gemäß Linie IX-IX in Figur 8.

Der Fahrzeugrahmen besteht aus zwei Rahmenlängsholmen 1 und 2, die heckseitig durch Schraubverbindungen 3 mit einem Gegengewicht 4 verbunden sind. Das Gegengewicht 4 bildet einen Querträger und somit einen tragenden Teil des Fahrzeugrahmens. Am frontseitigen Ende des Fahrzeugrahmens ist eine Querverbindung durch einen Untergurt 5 vorgesehen. Dieser ist durch Schraubverbindungen 6 mit den Rahmenlängsholmen 1 und 2 flächig verbunden.

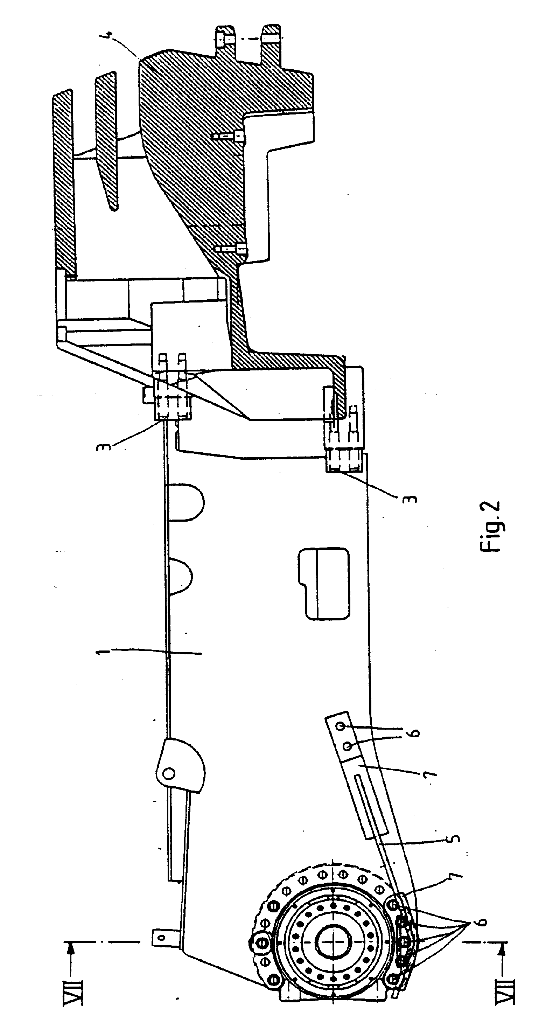

Die Konstruktion des Untergurtes 5 ist in der Zusammenschau mit Figur 2 ersichtlich. Der Untergurt 5 besteht aus einem in Fahrzeuglängsrichtung U-förmigen Blech, wobei die Öffnung zur Heckseite gerichtet ist und die Schenkelinnenseiten des Blechs sich zu den Fahrzeugaußenseiten hin erweitern. In Fahrzeugquerrichtung ist das Blech V-förmig abgewinkelt. Der Anschluß an die Rahmenlängsholme 1 und 2 erfolgt über angeschweißte Bleche 7, die zur Aufnahme der Schraubverbindungen 6 ausgebildet sind. Der Untergurt 5 nimmt die Radkräfte und die asymmetrischen Stoßkräfte auf, die beispielsweise beim Anecken eines der in den Figuren nicht gezeigten Vorderräder oder des ebenfalls nicht dargestellten Hubmastes entstehen.

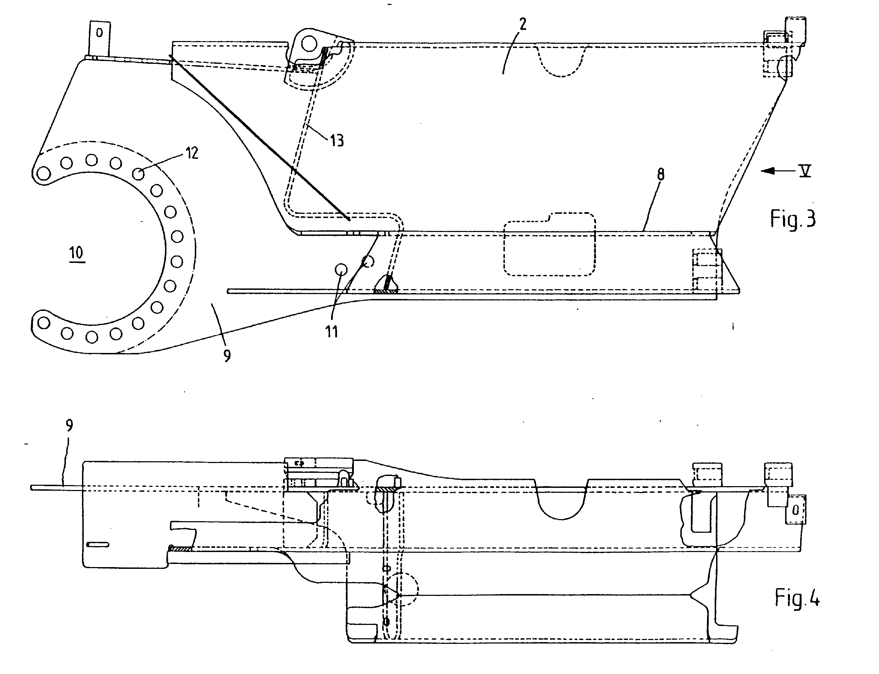

Der Rahmenlängsholm 2 ist in den Figuren 3 und 4 vergrößert dargestellt, wobei Figur 3 die Rahmenaußenseite zeigt. Der Rahmenlängsholm 2 ist im wesentlich identisch zum Rahmenlängsholm 1 aufgebaut. In dem in Figur 3 unteren Bereich des Rahmenlängsholmes 2 ist eine Trittstufe 8 vorgesehen, die das Besteigen des Fahrzeuges erleichtert. Der Mittel- und Heckbereich des Rahmenlängsholmes 2 ist stabiler ausgeführt als der Frontbereich. Im Frontbereich ist ein Blechlappen 9 vorgesehen, der eine kreisförmige Ausnehmung 10 zur Aufnahme einer Radantriebseinheit aufweist. Der Rahmenlängsholm 2 ist eine Schweißkonstruktion. Da es beim Schweißen in aller Regel zu einem Verzug der miteinander zu verschweißenden Bauteile kommt, ermöglicht die relativ biegeweiche Ausbildung des Frontbereiches eine problemlose Montage des Untergurtes 5, der jedoch nach erfolgtem Einbau für eine hohe Stabilität des Rahmens sorgt. Durch die Verwendung eines Blechlappens 9 steht zudem genug Raum innerhalb des Fahrzeugrahmens für großzügig dimensionierte Radantriebseinheiten zur Verfügung. Im Übergangsbereich zwischen dem Blechlappen 9 und dem Mittelbereich des Rahmenlängsholmes 2 sind bodennahe Bohrungen 11 angeordnet. Die kreisförmige Ausnehmung 10 ist von konzentrischen Bohrungen 12 umgeben. Die in der Figur 3 unteren Bohrungen 12 und die Bohrungen 11 sind für die Schraubverbindungen 6 des Untergurtes mit dem Rahmenlängsholm 2 vorgesehen.

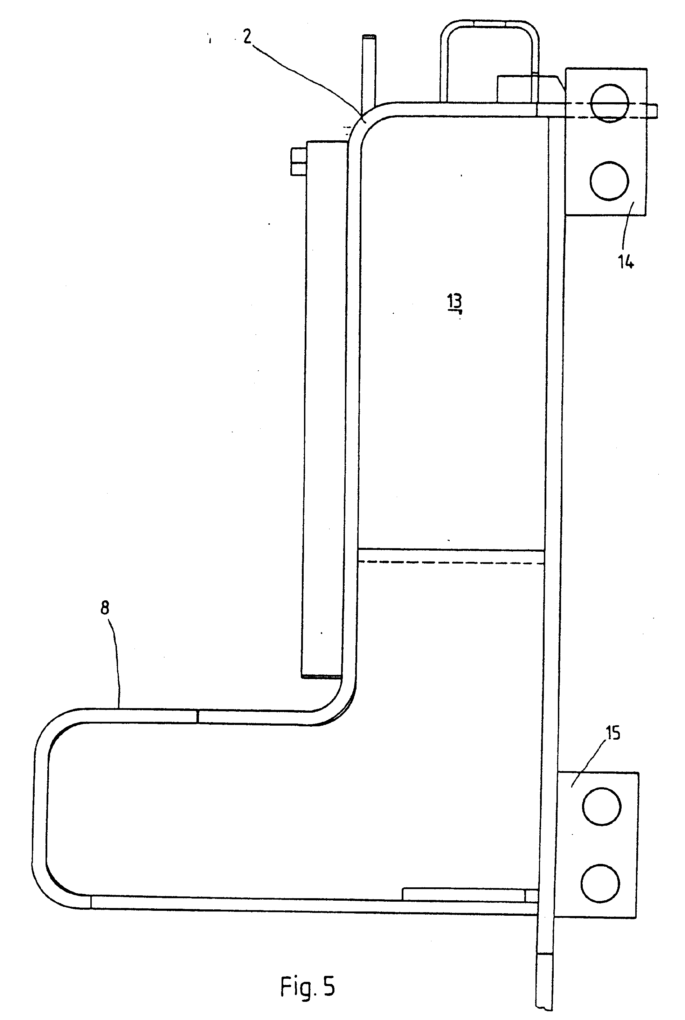

Die Trittstufe 8 bildet zusammen mit dem mittleren und dem heckseitigen Bereich des Rahmenlängsholmes ein Hohlprofil, dessen Struktur aus Figur 5 ersichtlich wird. Die solcherart gebildeten Rahmenlängsholme 1 und 2 sind sehr stabil.

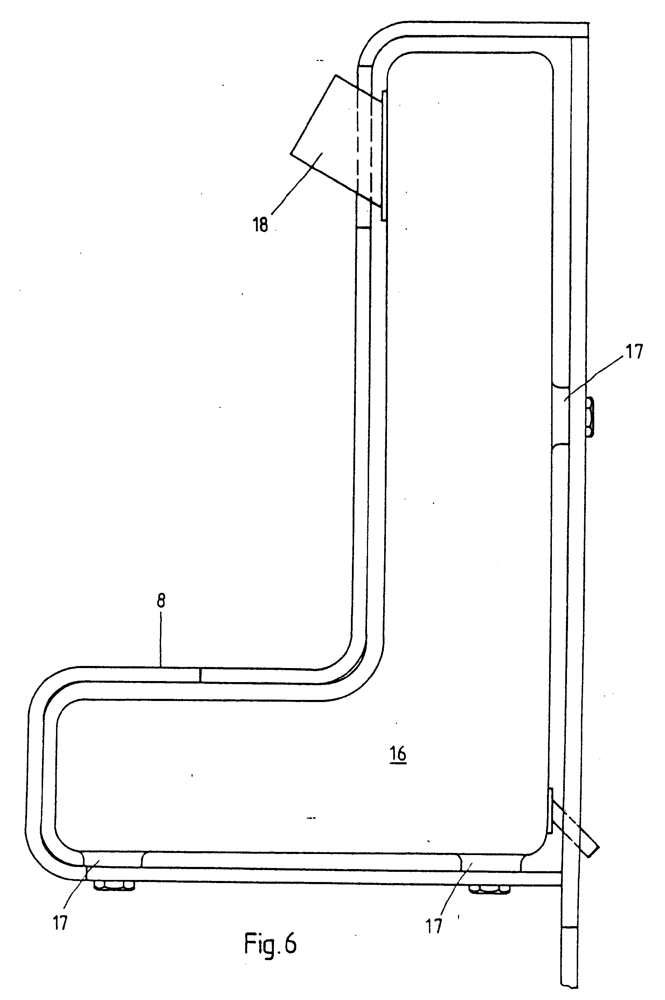

Das Hohlprofil ist heckseitig offen und frontseitig durch eine Wand 13 verschlossen. Heckseitige obere und untere Laschen 14 und 15 dienen der Aufnahme der Schraubverbindungen 3 zum Gegengewicht 4. Das Hohlprofil ist zur Aufnahme von Flüssigkeit vorgesehen, dient also als Tank, wobei eine entsprechende Abdichtung vorgesehen sein kann oder in vorteilhafter Weise eine Kunststoffauskleidung, insbesondere ein Kunststoffinnentank 16, wie er in Figur 6 dargestellt ist, vorhanden sein kann. Der heckseitig eingeschobene Kunststoffinnentank 16 verhindert, daß Verschmutzungen, die beim Schweißen des Rahmenlängsholmes entstehen, durch die Nutzung der Hohlräume als Tank in die Flüssigkeit gelangen. Der Kraftstoffinnentank 16 ist der Hohlprofilform angepaßt, was herstellungstechnisch keine Probleme bereitet. Der Hohlraum im Rahmenlängsholm 1 kann beispielsweise der Aufnahme eines Kunststofftanks dienen, während der Hohlraum im Rahmenlängsholm 2 für die Aufnahme eines Hydraulikflüssigkeitstanks vorgesehen sein kann. Der Kunststoffinnentank 16 kann durch Verdickungen 17 mit dem Blech des Rahmenlängsholmes verschraubt sein. Ein Einfüllstutzen 18 wird erst nach der Tankmontage installiert. Der Tank ist in dem stabil ausgebildeten Rahmenlängsholm sicher untergebracht. Die offenen Heckseiten der Hohlräume sind nach der Befestigung des Gegengewichtes 4 verschlossen.

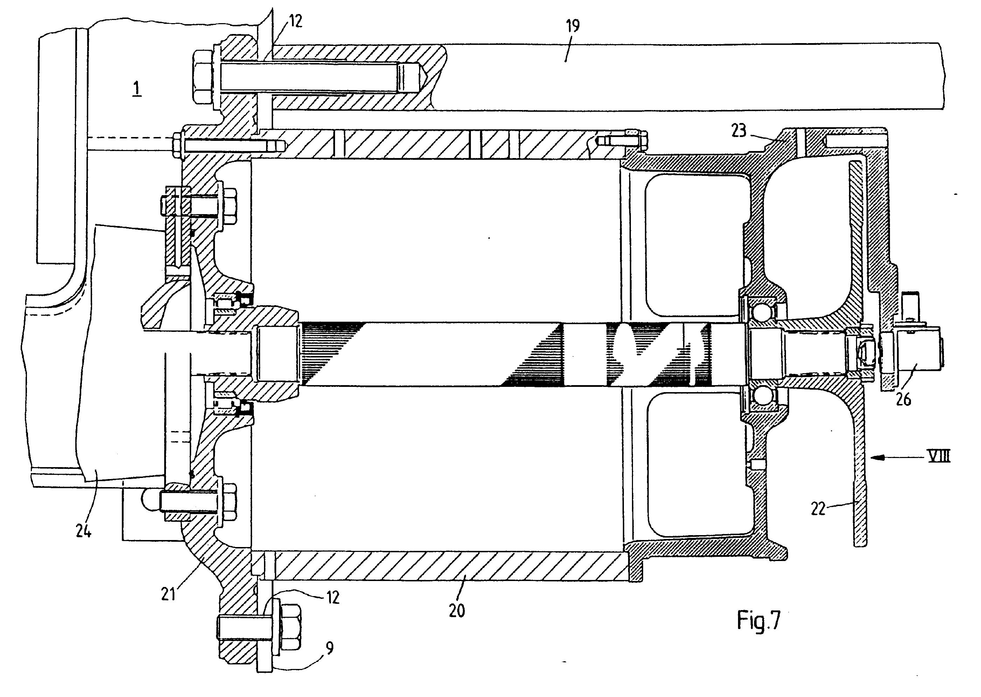

In Figur 7 ist eine Radantriebseinheit dargestellt sowie eine Druckstrebe 19, mit der ebenfalls die beiden Rahmenlängsholme 1 und 2 frontseitig miteinander verbunden sind. Auf eine Darstellung des Untergurtes 5 wurde in dieser Figur der besseren Übersichtlichkeit halber verzichtet. Die Druckstrebe 19 dient der Aufnahme von aus dem Fahrzeuggewicht und den zu transportierenden Lasten resultierenden Druckkräften. Diese entstehen bei Einwirken einer Radkraft. In Folge des Hebelarmes, der zwischen dem Angriffspunkt der Radkraft und dem Blechlappen 9 vorhanden ist, wird ein Drehmoment gebildet, das bestrebt ist, den Blechlappen 9 in Richtung zur Fahrzeuglängsachse zu drücken.

Die Druckstrebe 19 ist vertikal zum Untergurt 5 beabstandet, so daß in dem entstehenden Zwischenraum genügend Platz für die Aufnahme von zwei Radantriebseinheiten bleibt. Dadurch wird zum einen der zur Verfügung stehende Raum optimal ausgenutzt, zum anderen befindet sich der Radantrieb in einem Bereich, der sehr gut zur Aufnahme von Radkräften geeignet ist und sich nur wenig verformt. Für jedes Rad ist eine einzelne Radantriebseinheit vorgesehen. Die Radantriebseinheiten stehen untereinander nicht in mechanischer Verbindung. Die durch die bei der Herstellung des Fahrzeugrahmens auftretenden Toleranzen erzeugten Verspannungen beim Zusammenbau der Rahmenlängsholme werden daher nicht in die Radantriebseinheiten, sondern in den Untergurt 5 und die Druckstrebe 19 verlagert.

Eine Radantriebseinheit besteht aus einem Elektromotor 20, der in Verlängerung der Radachse im Inneren des Rahmens angeordnet und über einen Ringflansch 21 am Blechlappen 9 befestigt ist. Der Einfachheit halber ist in der Figur nur das Gehäuse und die Abtriebswelle des Elektromotors dargestellt. Der Außendurchmesser des Elektromotors 20 entspricht im wesentlichen dem Innendurchmesser der Ausnehmung 10. Die Befestigung des Ringflansches 21 am Blechlappen 9 erfolgt mit Hilfe der Bohrungen 12. Über eine der oberen Bohrungen 12 wird auch die eine Seite der Druckstrebe 19 am Rahmenlängsholm befestigt. Am rahmeninneren Axialende des Elektromotors 20 ist eine Scheibenbremsanlage, bestehend aus einer Bremsscheibe 22 und einem Bremssattelträger 23, befestigt. Am radnahen Ende des Elektromotors 20 ist an dem Ringflansch 21 ein Planetengetriebe 24 befestigt, das die in der Figur nicht dargestellte Radfelge trägt. Auf eine detaillierte Darstellung des Planetengetriebeaufbaues wurde verzichtet.

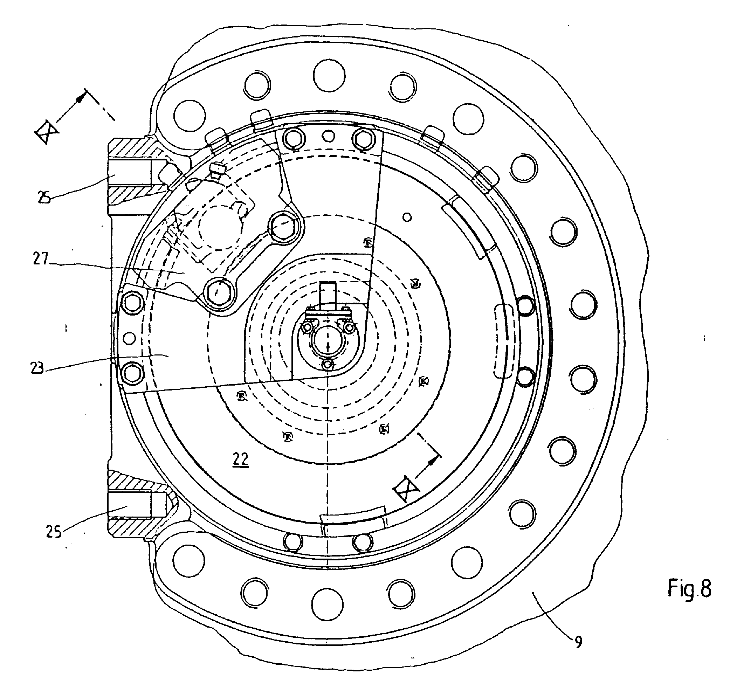

Der Ringflansch 21 bildet in diesem speziellen Beispiel das Lagerschild des Elektromotors 20. Der Ringflansch 21 ist zur Befestigung des Hubgerüstes des Gabelstaplers vorgesehen, was aus Figur 8 ersichtlich ist, wo die zu diesem Zweck vorhandenen Gewindebohrungen 25 dargestellt sind. Es ist möglich, ohne Demontage des Hubgerüstes sowohl den Elektromotor 10 als auch das Planetengetriebe 24 zu entfernen, weil der Ringflansch 21 im allgemeinen immer am Blechlappen 9 befestigt ist. Nach Abnahme des Hubgerüstes kann aber auch sehr leicht die komplette Radantriebseinheit nach Lösen der Befestigungsschrauben des Ringsflansches 21 aus dem Rahmenlängsholm gezogen werden.

Am rahmeninneren Ende der Radantriebseinheit ist ein Drehzahlgeber 26 an dem Bremssattelträger 23 befestigt. Die Schraubverbindungen zwischen dem Ringflansch 21 und dem Blechlappen 9 dienen gleichzeitig der Befestigung der Druckstrebe 19 und des Untergurtes 5. Diese Teile bilden im zusammengebauten Zustand einen äußerst stabilen Frontbereich des Fahrzeugrahmens.

Der Radstand der Vorderachse ist bestimmt von den axialen Abmessungen der Radantriebseinheiten. Der Radstand wiederum ist maßgebend für die Baubreite des Gabelstaplers. Um in enger Umgebung arbeiten zu können, ist es erwünscht, daß Gabelstapler bei hoher Tragkraft und hoher Antriebskraft eine möglichst geringe Baubreite aufweisen. Um einen möglichst geringen Radstand zu erreichen bzw. um bei gegebenem Radstand möglichst große und damit leistungsfähige Radantriebseinheiten unterbringen zu können, hat jede Bremsscheibe 22 einen eigenen Bremssattel 27, wobei die beiden Bremssättel 27 zueinander drehversetzt angeordnet sind.

Beispielsweise ist, wie aus Figur 8 ersichtlich, der auf dem Bremssattelträger 23 befestigte Bremssattel 27 in Fahrtrichtung nach vorne oben geneigt. Der gegenüberliegende, d.h. vor der Zeichenebene befindliche, zu der zweiten nicht gezeigten Radantriebseinheit gehörende Bremssattel kann beispielsweise gegen die Fahrtrichtung nach hinten oben geneigt sein. Dadurch können beide Radantriebseinheiten sehr nahe aneinander gerückt werden und daher entweder ein enger Radstand oder große Elektromotoren realisiert werden. Der verbleibende Abstand beträgt nur wenig mehr als die Breite einer Bremssattelhälte 27a. Dieser Abstand ist auch ausreichend für die Unterbringung des Drehzahlgebers 26. Als Bremssattel 27 kann ein serienmäßiger Bremssattel Verwendung finden, wie er auch im Automobilbau zum Einsatz kommt.

## Patentansprüche

1. Gabelstapler mit einem Fahrzeugrahmen, der mit einem zwei Rahmenlängsholme (1,2) heckseitig verbindenden Gegengewicht (4) versehen ist und eine an den vorderen Enden der Rahmenlängsholme (1,2) angeordnete Querverbindung aufweist, wobei als Querverbindung ein bodennaher Untergurt (5) und mindestens eine dazu vertikal beabstandete bodenferne Druckstrebe (19) vorgesehen ist, **dadurch gekennzeichnet,** daß das Gegengewicht (4), der Untergurt (5) und die Druckstrebe (19) lösbar mit den Rahmenlängsholmen (1, 2) verbunden sind.

2. Gabelstapler nach Anspruch 1, dadurch gekennzeichnet, daß die Rahmenlängsholme (1,2) im vorderen Endbereich (9) eine geringere Biegesteifigkeit gegenüber quer zur Fahrzeuglängsachse einwirkenden Kräften aufweisen als im heckseitigen Bereich.

3. Gabelstapler nach Anspruch 2, dadurch gekennzeichnet, daß der Untergurt (5) flächig an den Rahmenlängsholmen (1,2) abgestützt ist und sich die Verbindungsflächen (7) bis in den Bereich höherer Biegesteifigkeit erstrecken.

4. Gabelstapler nach einem der vorangegangenen Ansprüche, dadurch gekennzeichnet, daß der Radantrieb zwischen Untergurt (5) und Druckstrebe (19) angeordnet ist.

5. Gabelstapler nach Anspruch 4, dadurch gekennzeichnet, daß zwei voneinander getrennte Radantriebseinheiten vorgesehen sind.

## Claims

1. A fork lift truck with a vehicle chassis which is provided with a counterweight (4), which connects two chassis longitudinal members (1, 2) at the rear end, and comprises a transverse link which is arranged at the front ends of the chassis longitudinal members (1, 2), where a lower yoke (5) in the vicinity of the ground and at least one strut (19) remote from the ground and vertically spaced from said lower yoke (5) serve as transverse link, characterised in that the counterweight (4), the lower yoke (5) and the strut (19) are detachably connected to the chassis longitudinal members (1, 2).

2. A fork lift truck as claimed in Claim 1, characterised in that the chassis longitudinal members (1, 2) possess a lower resistance to bending with respect to forces acting transversely to the vehicle longitudinal axis in the front end zone (9) than in the rear end zone.

3. A fork lift truck as claimed in Claim 2, characterised in that the lower yoke (5) bears in planar fashion against the chassis longitudinal members (1, 2) and the connection surfaces (7) extend into the zone of greater bending resistance.

4. A fork lift truck as claimed in one of the preceding claims, characterised in that the wheel drive is arranged between the lower yoke (5) and the strut (19).

5. A fork lift truck as claimed in Claim 4, characterised in that two wheel drive units which are separate from one another are provided.

## Revendications

1. Chariot élévateur à fourches possédant un châssis constitué de deux longerons (1, 2) reliés, à l'arrière par un contrepoids, à leurs extrémités avant par une liaison transversale constituée d'une armature inférieure (5) située près du sol, surélevée, à une certaine distance verticale, par au moins une barre de compression (19), caractérisé en ce que le contrepoids (4), l'armature inférieure (5) et la barre de compression (19) sont reliés de manière amovible aux longueurs (1, 2).

2. Chariot élévateur à fourches selon la revendication 1, caractérisé en ce que les longerons de châssis (1, 2) ont, vis-à-vis des forces transversales par rapport à l'axe du véhicule, une rigidité moindre dans la zone de leurs extrémités avant que dans la zone arrière.

3. Chariot élévateur à fourches selon la revendication 2, caractérisé en ce que l'armature inférieure prend appui largement sur les longueurs (1, 2), par des surfaces de liaison qui s'étendent jusqu'aux zones à rigidité plus élevée.

4. Chariot élévateur à fourches selon une des revendications précédentes, caractérisé en ce que la transmission aux roues est disposée entre l'armature inférieure (5) et la barre de compression (19).

5. Chariot élévateur à fourches selon la revendication 4, caractérisé en ce que ses roues sont entraînées par deux unités d'entraînement de roues séparées.
